# FASCICULE DE BREVET EUROPEEN

(11) **EP 2 326 606 B1**
(45) Date de publication et mention de la délivrance du brevet: **03.04.2019**
(21) Numéro de dépôt: 09741362.9
(22) Date de dépôt: 03.09.2009
(51) Int. Cl.: C04B 35/573, B23K 35/32, B23K 35/00, B23K 35/02, C04B 37/00

(54) **PROCEDE D'ASSEMBLAGE DE PIECES CARBONEES PAR BRASAGE REFRACTAIRE**
VERFAHREN ZUR VERBINDEN VON KOHLENSTOFFKÖRPER MITTELS EINES FEUERFESTLÖTVERFAHRENS
METHOD FOR ASSEMBLING CARBON BODIES TRHOUGH REFRACTORY BRAZING

(30) Priorité: 05.09.2008 FR 0855970
(43) Date de publication de la demande: 01.06.2011
(73) Titulaire: Commissariat à l'Énergie Atomique et aux Énergies Alternatives, 75015 Paris (FR)
(72) Inventeur: GARANDET, Jean-Paul, F-38000 Grenoble (FR); CAMEL, Denis, F-73000 Chambery (FR); DREVET, Béatrice, F-38000 Grenoble (FR); EUSTATHOPOULOS, Nicolas, F-38100 Grenoble (FR); ISRAEL, Rana, Liban (LB)
(74) Mandataire: Nony
(86) Numéro de dépôt international: PCT/FR2009/051665
(87) Numéro de publication internationale: WO 2010/026341

(56) Documents cités:
- EP-A- 0 388 666
- EP-A- 1 829 843
- US-A- 4 952 533
- US-A- 5 079 195

## Description

La présente invention se rapporte à un procédé d'assemblage de pièces carbonées par brasage réfractaire avec une brasure à base de carbure de silicium, les pièces complexes ainsi obtenues étant particulièrement utiles dans le domaine de la microélectronique et du solaire photovoltaïque.

Les matériaux carbonés sont largement utilisés dans de nombreux secteurs industriels. Toutefois, la fabrication de pièces ayant une forme complexe ne s'avère pas, d'une manière générale, aisée. Pour surmonter cette difficulté, il est souvent privilégié l'option consistant à fabriquer des éléments de base de structure simple qui sont ensuite assemblés pour former la structure complexe recherchée. A ce jour, le brasage est une technique usuellement retenue pour réaliser des assemblages.

Le brasage du graphite a déjà été évoqué dans de nombreux travaux, souvent pour étudier son assemblage avec divers métaux [1-2], mais aussi avec lui-même [3]. Toutefois, les brasures actuellement réalisables contiennent toutes des éléments métalliques et ne sont donc pas acceptables dans des environnements nécessitant l'utilisation de silicium très pur comme la microélectronique et le solaire photovoltaïque.

On connaît en particulier du document EP 0 388 666, un procédé pour joindre deux plaques en graphite, en plaçant une composition adhésive comprenant une poudre de silicium entre les deux plaques à joindre, et en chauffant ensuite l'ensemble à une température d'environ 1450°C-2500°C.

On connaît également de US 5,079,195, un procédé d'assemblage de pièces carbonées avec un matériau composite carbure de silicium/siliciure obtenu, ledit matériau étant obtenu par infiltration d'une préforme carbonée par du silicium allié fondu contenant au moins un élément insoluble dans le carbure de silicium et formant des siliciures réfractaires.

Par ailleurs, US 4,952,533 décrit l'assemblage de céramique en carbure de silicium *via* l'utilisation d'une composition contenant notamment de la poudre de carbure de silicium, de la poudre de carbone et de la poudre de silicium.

Egalement, EP 1 829 843 divulgue un procédé de traitement de pièces en carbone poreux avec du silicium liquide pour former du carbure de silicium.

Néanmoins, aucun de ces documents ne décrit un procédé permettant d'obtenir des brasures acceptables pour des domaines nécessitant l'utilisation de silicium très pur.

La présente invention a précisément pour objet de proposer une nouvelle technique de brasage permettant de donner satisfaction à cette exigence de pureté.

En particulier, la présente invention vise à proposer une technique de brasage pour des pièces carbonées particulièrement avantageuse en terme de pureté au niveau de la brasure qu'elle forme.

Plus particulièrement, la présente invention vise à proposer une technique de brasage pour des pièces carbonées reposant sur l'utilisation de silicium à titre de matériau de brasure.

La présente invention vise notamment à proposer un procédé d'assemblage ne nécessitant pas d'autre(s) élément(s) que le carbone et le silicium et donc notamment adapté à la formation de pièces dédiées plus particulièrement à des utilisations dans les domaines de la microélectronique et du solaire photovoltaïque.

La présente invention met notamment à profit le fait que lorsque du silicium liquide est mis en contact avec un matériau carboné, une couche de carbure de silicium se forme par réaction à leur interface [4]. Cette réaction peut se poursuivre jusqu'à la formation d'une couche d'épaisseur variant typiquement entre 10 et 20 µm et dont la croissance est limitée par la diffusion du carbone dans son épaisseur. Il est connu que la profondeur d'infiltration du silicium dans une matrice carbonée dépend principalement de la porosité de cette matrice et de la température à laquelle est réalisée la mise en contact des deux matériaux. Sur des matériaux de type graphite extrudé, des profondeurs centimétriques sont souvent atteintes, alors qu'elles sont de l'ordre d'une fraction de millimètre pour des graphites à grains fins. Pour ce qui est du carbone vitreux, aucune infiltration notable n'est observée et la couche de carbure de silicium se forme uniquement à l'interface.

L'invention a pour objet de proposer une technique de brasage permettant de contrôler précisément l'infiltration du silicium liquide au niveau des pièces de matériaux carbonés à assembler.

La présente invention a pour objet un procédé utile pour assembler au moins deux pièces carbonées possédant une granulométrie inférieure à 10 µm et comprenant au moins les étapes consistant à :
a) disposer des pièces carbonées à assembler et d'un élément en silicium, notamment sous la forme d'un feuillard de silicium, ledit élément étant intercalé entre lesdites pièces, et
b) maintenir l'ensemble cohésif sous l'effet d'une pression et le soumettre à un chauffage à une température variant de 1410°C à 1500°C sous atmosphère inerte pendant une durée de 10 minutes à 1 heure, pour fondre le silicium et former un joint contenant au moins un pont de carbure de silicium à l'interface desdites pièces et
c) exposer l'ensemble obtenu à l'issue de l'étape b) à un palier de température supérieure à la température de l'étape b) et variant de 1500°C à 1750°C pendant une durée de 3 à 8 heures pour consommer l'intégralité du silicium fondu et former un joint de carbure de silicium sur toute la surface de l'interface desdites pièces carbonées.

L'ensemble obtenu à l'issue de l'étape b) est ainsi exposé via une étape c) consécutive à une température supérieure à la température considérée en étape b) pour consommer l'intégralité du silicium fondu et former un joint de carbure de silicium sur toute la surface de l'interface desdites pièces carbonées.

Ainsi, le recuit prolongé à haute température permet une transformation complète du silicium en SiC.

Le joint de carbure de silicium obtenu à l'issue de l'étape c) est continu.

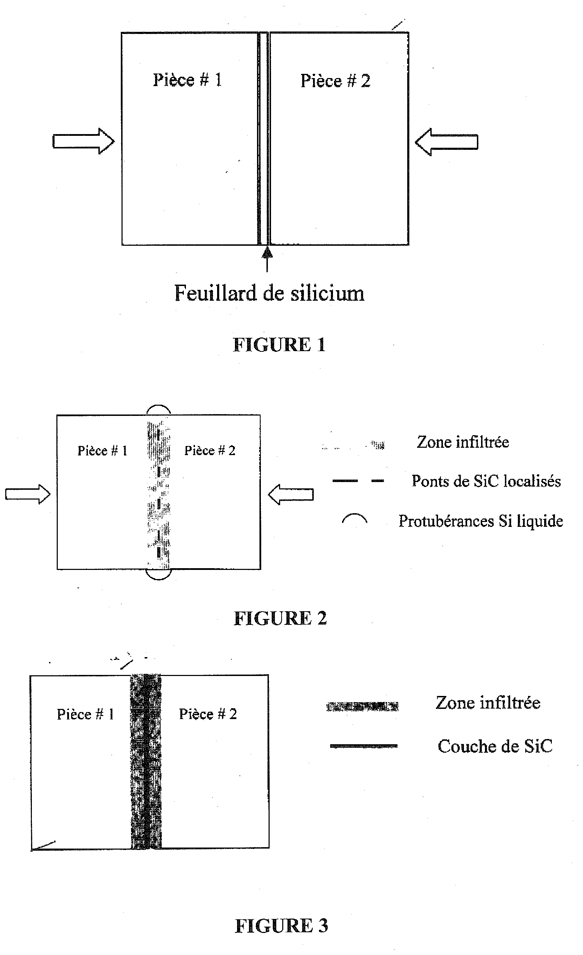

Selon un procédé, qui n'est pas selon de la présente invention, un point de jonction SiC désigne un chemin physique entre les deux pièces à assembler. Un tel point de jonction peut posséder un diamètre d'au moins 1 µm pour une longueur de 30 µm, par exemple. De tels points de jonction sont illustrés en figure 2.

Dans cette alternative, qui n'est pas selon l'invention, l'intégralité du silicium de départ n'est pas consommée. L'excès de silicium est, pour l'essentiel, localisé alors généralement aux deux extrémités de la brasure et peut en être éliminé, si nécessaire, par des technologies usuelles.

Selon le procédé de l'invention impliquant la mise en oeuvre obligatoire de l'étape c), la brasure est formée d'une zone composite contenant à l'interface des deux pièces un joint de carbure de silicium établi sur toute la longueur de cette interface. Dans ce procédé, la brasure est totalement dénuée de silicium solide résiduel. Dans le cas où les pièces carbonées à assembler possèdent une porosité ouverte, le joint SiC présent dans la brasure y est bordé latéralement de zones composites. L'ensemble du silicium fondu est transformé en SiC, à la fois dans le joint et dans la zone composite, sans laisser de silicium non réagi dans les pores du graphite.

L'utilisation du silicium comme matériau de brasure permet avantageusement la réalisation de pièces carbonées de forme complexe qui soient, d'une part, satisfaisantes, en terme de pureté et de ce fait adaptées aux environnements les plus sévères.

Les brasures formées selon le procédé de l'invention décrit ci-dessus s'avèrent compatibles avec une utilisation à des températures supérieures à la température de fusion du silicium, voire allant jusqu'à 2000 °C puisqu'elles sont totalement dénuées en silicium.

### Elément de silicium

Le présent procédé met en oeuvre à titre de matériau de départ, outre les pièces carbonées à assembler, au moins un élément de silicium.

Comme il ressort de ce qui précède, cet élément de silicium a pour vocation lorsqu'il est porté à une température supérieure à la température de fusion du silicium, de se transformer en silicium fondu. Le silicium fondu, en interagissant avec les surfaces carbonées qui lui sont contiguës, va former un joint SiC sur toute la longueur de cette interface, et en outre, si le matériau carbone est poreux, une zone composite à l'interface des deux pièces.

Lorsque le procédé ne met pas en oeuvre l'étape c), tout le silicium fondu n'est pas consommé. Dans le procédé selon l'invention, il est totalement consommé.

Cet élément de silicium peut avantageusement posséder des dimensions et en particulier une surface ajustée aux surfaces des faces des deux pièces carbonées à assembler.

Avantageusement, il s'agit d'une plaquette ou encore d'un feuillard de silicium. Son épaisseur peut varier de 50 à 800 µm, notamment de 300 µm à 500 µm.

La quantité en silicium, figuré par l'élément de silicium, est à ajuster au regard du type de brasure recherché, de la nature des pièces carbonées à assembler, en particulier leur degré de porosité respective et de la température retenue pour la réalisation de l'étape b), voire de l'étape c).

En effet, en fonction de la porosité des deux pièces carbonées à assembler, la réaction considérée en étape b) peut se traduire également par une infiltration du silicium fondu en profondeur de part et d'autre de l'interface de ces pièces, conduisant à la formation d'une zone composite d'épaisseur supérieure à celle obtenue avec des pièces carbonées dénuées de porosité ouverte à l'image du carbone vitreux.

L'homme de l'art est à même de part ses connaissances, d'ajuster la quantité en silicium au regard du type de brasure recherché.

Par exemple, l'épaisseur d'un feuillard de silicium peut être ajustée de 300 µm à 500 µm pour qu'à l'état fondu en étape b), le silicium fondu forme sous une pression de 0,2 à 3 bars un joint liquide d'épaisseur de 10 µm à 40 µm, en particulier de 20 µm à 30 µm à l'interface des deux pièces à assembler possédant une granulométrie de 1 à 5 µm pour une porosité ouverte de 0 à 40 %.

### Pièces carbonées

Plus particulièrement, au sens de la présente invention, une couche à base d'un matériau carboné est figurée par un matériau formé, pour l'essentiel, d'atomes de carbone.

Plus précisément, un matériau carboné est, au sens de l'invention, un matériau dont la teneur en atomes de carbone est supérieure à 95 % en poids, notamment supérieure à 99 %, en poids par rapport à son poids total.

Il s'agit plus particulièrement de graphite.

Le procédé selon l'invention, est tout particulièrement avantageux pour des matériaux carbonés dont la taille des grains varie de 1 à 10 µm, avantageusement de 1 à 5 µm.

Le procédé est également utilisable pour des matériaux de type carbone vitreux. Dans ce cas, l'épaisseur de la zone composite est pratiquement nulle, tous les processus se déroulant uniquement à l'interface entre les deux pièces.

La porosité des matériaux carbonés peut varier de 0 % (cas du carbone vitreux) à 40 % en volume.

Cette porosité peut être caractérisée par la méthode de la porosimétrie mercure.

Dans le cas de surface à assembler présentant des défauts de planéité et/ou de rugosité, ces défauts doivent être de taille inférieure à l'épaisseur souhaitée du joint. En cas contraire, les surfaces devront être rectifiées.

Comme précisé précédemment, selon la nuance de graphite retenue, il y aura possibilité de former un joint et éventuellement une zone composite de dimension variable au regard du taux d'infiltration du silicium fondu dans les pores (de 0 à 1 mm de pénétration).

Le procédé est applicable au brasage de pièces d'une vaste gamme dimensionnelle, les ordres de grandeur des pièces pouvant varier typiquement du millimètre au mètre.

D'autres caractéristiques et avantages de l'invention ressortiront mieux à la lecture de la description qui va suivre, donnée à titre illustratif et non limitatif en référence aux figures annexées dans lesquelles il convient de noter que, pour des raisons de clarté, les différentes couches de matériau des structures visibles sur les figures sont représentées en échelle libre ; les dimensions de certaines parties étant fortement exagérées.
La figure 1 est une représentation schématique de 2 pièces à assembler entre lesquelles est intercalé un feuillard de silice.
La figure 2 est une représentation schématique de l'assemblage de la figure 1 qui a été exposé aux conditions de chauffage de l'étape b).
La figure 3 est une représentation schématique de l'assemblage de la figure 2 et qui a été exposé aux conditions de l'étape c).
La figure 4 est une photographie à l'échelle microscopique de l'épaisseur d'un joint obtenu selon l'invention. Les ponts SiC y figurent en blanc et les porosités en sombre.

### Description détaillée des modes de réalisation de l'invention

### Etape b)

Lors de l'étape b), les pièces carbonées à braser et la pièce de silicium peuvent être portées de 1410 °C à 1500 °C, notamment de 1430 °C à 1500 °C pendant une durée de 10 minutes à 1 heure, voire de 10 minutes à 40 minutes.

Pour sa part, la pression à appliquer est avantageusement ajustée pour que l'épaisseur de la veine liquide de silicium fondu localisée entre les deux pièces à assembler soit égale à l'épaisseur souhaitée du joint en carbure de silicium à former.

Cette pression conduit également à la formation, aux deux extrémités de l'interface, de protubérances de Si liquide à l'extérieur du joint (voir figure 2).

Au cours de cette étape b), plusieurs processus se déroulent en parallèle :
- la formation de ponts en carbure de silicium par réaction aux endroits où la rugosité des pièces à assembler fait que la distance entre les pièces est minimale, et
- dans le cas de pièce(s) possédant une structure graphite poreuse, l'infiltration du silicium fondu jusqu'au moment où les pores présents à l'interface se bouchent par réaction et formation du carbure de silicium, interrompant ainsi l'alimentation de la zone infiltrée. A l'issue de ce phénomène d'infiltration, la profondeur maximale de pénétration est atteinte (voir figure 2), et il subsiste du silicium non réagi dans les pores : cette zone est la zone composite.

En conclusion, à l'issue de cette étape b), des ponts de SiC localisés se sont formés au niveau de l'interface, la profondeur maximale d'infiltration dans les matrices carbonées des deux pièces est atteinte et des protubérances liquides sont formées sous l'effet de la pression, sur les parois latérales des pièces aux extrémités de l'interface.

Pour contrôler le volume liquide en excès et éviter que le silicium ne vienne mouiller l'extérieur des pièces en graphite, des logements d'expansion peuvent être positionnés de part et d'autre du joint, comme cela est fait classiquement dans les procédés de brasage.

### Etape c)

Cette étape c) réalisée consécutivement à l'étape b) est assimilable à un second palier de recuit destiné à obtenir la formation, à l'interface, d'un joint par prolifération de ponts en SiC et/ou par épaississement des ponts existants.

Ce second palier est réalisé à une température variant de 1500 °C à 1750 °C, avantageusement de 1600 °C à 1700 °C.

Le silicium présent dans les protubérances latérales est alors transporté par capillarité vers les zones non réagies. En parallèle, on observe une maturation de la structure composite de la zone infiltrée. Cette étape c) est achevée quand le joint est formé et quand tout le silicium est consommé comme illustré en figure 3.

La durée de recuit de ce second palier varie de 3 à 8 heures, préférentiellement de 3 à 6 heures.

Pour s'assurer que le silicium formant, à l'issue de l'étape b), des protubérances sur les parois latérales des pièces et qui est, le cas échéant, récupéré dans des logements d'expansion, revienne en totalité dans les zones encore non réagies du joint, des canaux de surface peuvent être gravés dans les pièces à braser pour transporter le silicium.

Ces canaux étant eux-mêmes destinés à se boucher du fait de la réaction Si + C → SiC, leur diamètre peut être avantageusement légèrement supérieur à l'épaisseur du joint. Dans le cas de matériaux bruts d'usinage, les rugosités de surface peuvent suffire au transport du silicium.

L'invention va maintenant être décrite au moyen de l'exemple suivant donné bien entendu à titre illustratif et non limitatif de l'invention.

### Matériaux de départ :

Les pièces à assembler sont des pièces de Graphite Carbone Lorraine 2020, avec 15 % de porosité volumique, et de granulométrie de 5 µm.

Plaquette de silicium 10x10 cm² et d'épaisseur 500 µm.

### Exemple 1 : (seulement contenant les étapes a) et b), pas selon l'invention)

Les deux pièces carbonées entre lesquelles est intercalé le feuillard de silicium sont maintenues cohésives avec une pression de 2,5 bars. L'ensemble est porté à 1500 °C sous atmosphère de gaz neutre (Argon U) pendant 30 minutes. L'ensemble est refroidi à température ambiante à la vitesse de 5 °C/mn jusqu'à 900 °C puis par refroidissement naturel après arrêt du chauffage.

La brasure ainsi obtenue est formée d'une zone composite contenant des ponts de carbure de silicium.

### Exemple 2 :

Les deux pièces carbonées entre lesquelles est intercalé le feuillard de silicium sont maintenues cohésives avec une pression de 2,5 bars. L'ensemble est porté à 1460 °C sous atmosphère de gaz neutre (Argon U) pendant 10 minutes, puis porté à une température de 1600 °C pendant 5 heures. L'ensemble est ensuite refroidi à température ambiante à la vitesse de 5 °C/mn jusqu'à 900 °C puis par refroidissement naturel après arrêt du chauffage.

Par opposition à la brasure obtenue en exemple 1, celle-ci est dénuée de silicium. La profondeur de la zone infiltrée est de 400 à 600 microns et l'épaisseur du joint SiC formé est de 10 à 20 microns.

### Documents cités

[1] L. Yinquan, Z. Zhengde, D. Chaoquan et S. Yusheng, Materials Characterization 44 (2000) 425
[2] US 6,877,651,
[3] US 3,946,932,
[4] A. Favre, H. Fuzellier et J. Suptil, Ceramics International 29 (2003) 235

## Revendications

1. Procédé utile pour assembler au moins deux pièces carbonées possédant une granulométrie inférieure à 10 µm et comprenant au moins les étapes consistant à :
a) disposer des pièces carbonées à assembler et d'un élément en silicium, notamment sous la forme d'un feuillard de silicium, ledit élément étant intercalé entre lesdites pièces, et
b) maintenir l'ensemble cohésif sous l'effet d'une pression et le soumettre à un chauffage à une température variant de 1410°C à 1500°C sous atmosphère inerte, pour fondre le silicium et former un joint contenant au moins un pont de carbure de silicium à l'interface desdites pièces et
c) exposer l'ensemble obtenu à l'issue de l'étape b) à un palier de température supérieure à la température de l'étape b) et variant de 1500°C à 1750°C pour consommer l'intégralité du silicium fondu et former un joint de carbure de silicium sur toute la surface de l'interface desdites pièces carbonées, la brasure établie entre les deux pièces carbonées, obtenue à l'issue de l'étape c), étant totalement dénuée de silicium solide résiduel.

2. Procédé selon la revendication 1, dans lequel les pièces carbonées possèdent une porosité ouverte variant de 0 à 40 % en volume.

3. Procédé selon l'une quelconque des revendications précédentes, dans lequel le matériau carboné possède une taille granulométrique variant de 1 à 5 µm.

4. Procédé selon l'une quelconque des revendications précédentes, dans lequel le joint formé à l'interface des deux pièces assemblées possède une épaisseur variant de 10 à 40 µm, en particulier de 20 à 30 µm.

5. Procédé selon l'une quelconque des revendications 1 à 4, dans lequel l'étape b) est réalisée à une température variant de 1410 °C à 1500 °C, notamment de 1430 °C à 1500 °C pendant notamment une durée de 10 minutes à 1 heure, voire de 10 minutes à 40 minutes et l'étape c) est réalisée à une température variant de 1500 °C à 1750 °C, notamment de 1600 °C à 1700 °C, notamment pendant une durée de 3 à 8 heures, voire de 3 à 6 heures.

## Patentansprüche

1. Verfahren, geeignet zum Verbinden von mindestens zwei Kohlenstoffteilen, die eine Granulometrie von weniger als 10 µm aufweisen, und umfassend mindestens die folgenden Schritte:
a) Anordnen der zu verbindenden Kohlenstoffteile und eines Siliziumelements, insbesondere in Form eines Siliziumstreifens, wobei das Element zwischen die Teile eingefügt ist, und
b) Zusammenhalten der Anordnung unter Druckeinwirkung und Erwärmen derselben auf eine Temperatur im Bereich zwischen 1.410 °C bis 1.500 °C unter inerter Atmosphäre, um das Silizium zu schmelzen und eine Verbindung, die mindestens eine Siliziumkarbidbrücke enthält, an der Grenzfläche der Teile zu bilden, und
c) Aussetzen der nach Schritt b) erhaltenen Anordnung einer Temperaturstufe, die höher ist als die Temperatur von Schritt b) und im Bereich zwischen 1.500 °C bis 1.750 °C liegt, um das gesamte geschmolzene Silizium zu verbrauchen und um eine Siliziumkarbidverbindung auf der gesamten Oberfläche der Grenzfläche der Kohlenstoffteile zu bilden, wobei die nach Schritt c) erhaltene Lötstelle, die zwischen den beiden Kohlenstoffteilen entstanden ist, vollständig frei von festem Restsilizium ist.

2. Verfahren nach Anspruch 1, wobei die Kohlenstoffteile eine offenporige Porosität im Bereich von 0 bis 40 Vol.-% aufweisen.

3. Verfahren nach einem der vorhergehenden Ansprüche, wobei das Kohlenstoffmaterial eine Teilchengröße im Bereich von 1 bis 5 µm aufweist.

4. Verfahren nach einem der vorhergehenden Ansprüche, wobei die an der Grenzfläche der zwei verbundenen Teile gebildete Verbindung eine Dicke im Bereich von 10 bis 40 µm, insbesondere von 20 bis 30 µm aufweist.

5. Verfahren nach einem der Ansprüche 1 bis 4, wobei Schritt b) bei einer Temperatur im Bereich von 1.410 °C bis 1.500 °C, insbesondere von 1.430 °C bis 1.500 °C, insbesondere für eine Dauer von 10 Minuten bis 1 Stunde oder sogar 10 Minuten bis 40 Minuten durchgeführt wird, und Schritt c) bei einer Temperatur im Bereich von 1.500 °C bis 1.750 °C, insbesondere von 1.600 °C bis 1.700 °C, für insbesondere eine Dauer von 3 bis 8 Stunden oder sogar 3 bis 6 Stunden durchgeführt wird.

## Claims

1. A useful method for joining at least two carbon parts having a particle size lower than 10 µm and comprising at least the steps consisting in:
a) positioning the carbon parts to be joined and a silicon element, in particular in the form of a silicon strip, said element being inserted between said parts, and
b) maintaining the cohesive assembly under the effect of pressure and subjecting it to heating at a temperature between 1410°C and 1500°C under inert atmosphere, to melt the silicon and form a joint containing at least one silicon carbide bridge at the interface of said parts, and
c) exposing the assembly obtained after step b) to a temperature higher than the temperature of step b) and between 1500°C and 1750°C to consume all the molten silicon and form a silicon carbide joint on the whole surface of the interface of said carbon parts, the braze prepared between two carbon parts, obtained after step c), being completely devoid of residual solid silicon.

2. The method according to claim 1, in which the carbon parts have an open-cell porosity of 0 to 40% by volume.

3. The method according to any one of the preceding claims, in which the carbon material has a particle size of 1 to 5 µm.

4. The method according to any one of the preceding claims, in which the joint formed at the interface of the two joined parts has a thickness between 10 and 40 µm, in particular between 20 and 30 µm.

5. The method according to any one of claims 1 to 4, in which step b) is carried out at a temperature between 1410°C and 1500°C, in particular between 1430°C and 1500°C particularly for a period of 10 minutes to 1 hour, or even of 10 minutes to 40 minutes, and step c) is carried out at a temperature between 1500°C and 1750°C, in particular between 1600°C and 1700°C, particularly for a period of 3 to 8 hours, or even of 3 to 6 hours.
